# EUROPEAN PATENT APPLICATION

(11) **EP 1 603 191 A1**
(43) Date of publication of application: **07.12.2005**
(21) Application number: 04716778.8
(22) Date of filing: 03.03.2004
(51) Int. Cl.: H01Q 15/08, B29C 44/00, C08J 9/228, B29K 23/00

(54) **LUNEBERG LENS AND PROCESS FOR PRODUCING THE SAME**

(30) Priority: 11.03.2003 JP 2003065068
(71) Applicant: Sumitomo Electric Industries, Ltd., Osaka-shi, Osaka 541-0041 (JP)
(72) Inventor: KURODA, M., Osaka Wrks. Sumitomo Elec. Indst. Ltd., Osaka-shi, Osaka 554-0024 (JP); KISHIMOTO, T., Osaka Wks. Sumitomo Elc. Inds. Ltd., Osaka-shi, Osaka 554-0024 (JP); KIMURA, K., Osaka Wks. Sumitomo Elc. Inds. Ltd., Osaka-shi, Osaka 554-0024 (JP)
(74) Representative: Cross, Rupert Edward Blount
(86) International application number: PCT/JP2004/002656
(87) International publication number: WO 2004/086563

(57) **Abstract**

A Luneberg lens having a single-layer structure or a multilayer structure containing a plurality of layers having different dielectric constants, wherein the respective structure is produced by mixing a polyolefin resin and/or a derivative thereof with an inorganic filler having a high dielectric constant, the volume ratio of the polyolefin resin and/or the derivative thereof to the filler being 99 to 50 : 1 to 50, adding a foaming agent to the resulting resin mixture and then performing preliminary expansion, and molding the resulting pre-expanded beads; and wherein at least a foamed dielectric layer having a dielectric constant of 1.5 or more is formed using the pre-expanded beads that have been subjected to classification and selection such that f(A) satisfies the expression 0.0005 ≤ f(A) ≤ 0.1, where f(A) is represented by the equation: f(A) = σa/Aave, σa is the deviation of a gas volume fraction Ar in the foamed dielectric layer, and Aave is the average of the gas volume fractions Ars at positions in the foamed dielectric layer.

## Description

### Technical Field

The present invention relates to a Luneberg lens that is used for transmitting and receiving electromagnetic waves and that has satisfactory electrical characteristics and a method of producing the lens.

### Background Art

A known dielectric lens for microwaves has been disclosed in, for example, Japanese Unexamined Patent Application Publication Nos. 3-179805, 5-334934, 6-6126, 8-167811, 9-130137, and 2002-197923 and Japanese Examined Patent Application Publication No. 56-17767.

Among these known techniques, Japanese Unexamined Patent Application Publication No. 3-179805 discloses a lens composed of non-foam dielectrics. Japanese Examined Patent Application Publication No. 56-17767 discloses a lens composed of foam dielectrics. Furthermore, Japanese Examined Patent Application Publication No. 66-17767, and Japanese Unexamined Patent Application Publication Nos. 5-334934, 6-6126, 8-167811, 9-130137, and 2002-197923 disclose filler-containing foam dielectrics.

Electrical characteristics principally required of receiving or transmitting antennas are (1) gain (or G/T = gain/(noise) temperature) and (2) sidelobes. A Luneberg lens antenna, which is particularly used as a multi-beam antenna or an antenna for mobile communication, is required to have the same focal length, the same gain (or G/T), and the same sidelobe characteristics, regardless of the direction of electromagnetic waves.

Of the above-described characteristics (1) and (2), the sidelobe characteristics are significantly important since they are particularly susceptible to influences from adjacent satellites and other near antennas or tend to affect other antennas. For example, the sidelobe levels of a receiving antenna are required to be equal to or below values recommended in (1) Electronic Industry Assoc. of Japan (EIAJ) CPR-5101A or (2) International Telecommunication Union-R (ITU-R) recommendation (for receiving broadcasting satellite system (BSS)).

The sidelobe is, so to speak, noise and has a power of 1/100 or less of that of the main beam. Thus, the sidelobe is susceptible to various factors of the antenna. In particular, in a lens antenna through which electromagnetic waves transmit, the sidelobe is significantly affected by slight variations of the dielectric constant in the layers constituting the lens.

In the Luneberg lens, it is further difficult to control an antenna pattern such as sidelobes. The Luneberg lens is composed of dielectrics having a dielectric constant (ε) of 1 to 2, and to achieve such dielectric constant, it must contain a gas such as air. The gas is contained by foaming, which must be controlled to be uniform at any position in the lens. However, because of the dispersion of a foaming agent, thermal uniformity in heating a thick lens, and resin melt viscosity, it was difficult to produce a Luneberg lens exhibiting uniformity in terms of the sidelobe.

In particular, in the case where the dielectrics were composed of a composite dielectric consisting of three components as in the present invention: an olefin resin, an inorganic filler having a high dielectric constant, and a gas, it was very difficult to produce the dielectric composite having uniform dielectric constant at any position by mixing these components because these components vary greatly in their dielectric constants: 2 to 3, 100 or more, and 1, respectively. Because of such difficulty in combination of the difficulty to control the foaming, it was difficult to produce a satisfactory Luneberg lens that can exhibit satisfactory sidelobe characteristics for electromagnetic waves from any direction.

If the size of the Luneberg lens is increased, the gain is enhanced and a sharp beam is achieved, which results in easily satisfying the specified value of the sidelobes. However, in view of the installation place of the antenna and ease of installation, the Luneberg lens must be reduced in size. A general-purpose antenna is required to be compact and to satisfy the required electrical characteristics.

The known lenses described in the Patent Publications and the like are classified into filler-free lenses and filler-containing lenses. The disadvantages of these lenses are described as follows.

### [Filler-free lens]

A typical Luneberg lens is composed of a plurality of foamed dielectric layers prepared by foaming polystyrene (PS). However, in this lens, PS has a dielectric constant of 2.5, and each layer has a dielectric constant of 1 to 2; hence, the expansion ratio is low. Specifically, at a dielectric constant of 1.2 or more, the expansion ratio is 5 or less. At a dielectric constant of 1.4 or more, the expansion ratio is 3 or less. At a dielectric constant of 1.65, the expansion ratio is 2 or less. In this way, the expansion ratio is very low. The expansion ratio of a typical foamed product is generally 20 to 60 times. At an expansion ratio of 5 or less, it is difficult to conduct forming. Therefore, it is difficult to produce a uniformly foamed product at such low expansion ratios as described above. In order to constitute a Luneberg lens by combining dielectric layers foamed at such low expansion ratios, it is necessary to control the expansion ratio of each layer with an accuracy of 0.1 times. Therefore, it was very difficult to achieve a dielectric constant as designed.

In a bead forming method among various foam-forming methods, pre-expanded beads are prepared in advance. In the case of PS foamed materials having a low expansion ratio, the beads are only slightly foamed at such step. Thus, it is difficult to produce beads having a uniform expansion ratio: various beads are produced in a broad distribution of expansion ratio, ranging from a non-foamed bead to a foamed bead having an expansion ratio of 10 or more. Therefore, a uniform lens could not be produced.

Furthermore, at an expansion ratio of 2 or less, it was extremely difficult to form a shape: it was almost impossible to produce layers having uniform electrical characteristics and having a relative dielectric constant of 1.7 or more. The layer having uniform electrical characteristics and having a dielectric constant of 1.7 or more is seldom produced.

In view of the circumstances, in some known filler-free lenses, the middle layer was designed to have a greater dielectric constant in order to increase the expansion ratio of layers having higher dielectric constants, with dielectric constants (ε) of 1 to 1.7, and not 1 to 2. Such design adversely affects gain and sidelobes, which results in failure of producing a lens having satisfactory electrical characteristics.

With respect to a layer having a dielectric constant of 1.7 or more, there were cases in which the layer was made by bonding PS beads with an adhesive or by bonding a mixture of PS beads and glass fibers or beads with an adhesive. In this method, since the adhesive having a dielectric constant of 2 or more is present between the beads, the uniformity of the dielectric constants is significantly impaired. Furthermore, since adhesives generally have high tan δ (dielectric loss) and causes transmission loss, only lenses having low electrical characteristics can be produced.

In the case of lenses produced by such a difficult method, the yield is naturally low, which results in increase of cost.

Furthermore, the Luneberg lens composed of foamed PS is disadvantageous because the foaming ratio thereof is extremely low, resulting in a high mass (i.e., it becomes heavy).

### [Filler-containing lens]

Among the above-mentioned problems with the filler-free lenses, with respect to the weight reduction and the production of a layer having a dielectric constant of 1.7 or more, a proposed method is to add a filler, such as titanium oxide (refer to Japanese Unexamined Patent Application Publication No. 6-6126).

However, in this method, it was difficult to actually produce a Luneberg lens that could be used satisfactorily with respect to sidelobes and variations in gain, although theoretically the expansion ratio could be increased so as to achieve the weight reduction and the production of a layer having a dielectric constant of 1.7 or more. The reason for this is that with the three components: an olefin resin, an inorganic filler having a high dielectric constant, and a gas, a dielectric composite having uniform electrical characteristics cannot be made because the significant differences of their relative densities: 0.9, 4 to 6 make it difficult to homogeneously mix the components; and because nonuniform mixing, which results in nonuniform electrical characteristics, is caused by the significant differences in the relative dielectric constants of these components: i.e., the dielectric constants of the olefin resin, the inorganic filler, and the gas are 2 to 3, 100 or more, and 1, respectively. Consequently, a dielectric composite having the uniformity of the electrical characteristics cannot be provided.

As described above, controlling the expansion ratio with high accuracy is significantly difficult. In the filler-containing system, since the dielectric constants of components other than the gas are very high, variations in dielectric constant due to variations in foaming are large, whereby even small variations in a low expansion ratio cause incomparably greater variations in dielectric constant in the dielectric composite, as compared with the filler-free system.

Furthermore, in the filler-containing system, it is more difficult to perform uniform foaming as compared with the case in the filler-free system since foam breakages are easily to occur because the filler segments are present in thin resin films generated during foaming.

In short, with known techniques, it was difficult to produce a filler-containing foamed product having uniform electrical characteristics, in particular, a filler-containing foamed product having a low expansion ratio, since in the filler-containing system, it was difficult to obtain uniform dielectrics as compared with the case in the filler-free system, and moreover, it was significantly difficult to obtain uniform dielectrics with a foamed product as compared with the case of non-foamed product.

### Disclosure of Invention

Accordingly, it is an object of the present invention to provide a Luneberg lens satisfying the requirements for both gain and sidelobe characteristics, having lightness in weight and high uniformity, and achieving a reduction in cost due to mass production.

To solve the above-described problems, the present invention provides a Luneberg lens having a single-layer structure or a multilayer structure containing a plurality of layers having different dielectric constants, wherein the respective structure is produced by mixing a polyolefin resin and/or a derivative thereof with an inorganic filler having a high dielectric constant, the volume ratio of the polyolefin resin and/or the derivative thereof to the filler being 99 to 50:1 to 50, adding a foaming agent to the resulting resin mixture and then performing preliminary expansion, and molding the resulting pre-expanded beads; and wherein at least a foamed dielectric layer having a dielectric constant of 1.6 or more is formed using the pre-expanded beads that have been subjected to classification and selection such that f(A) satisfies the expression 0.0005 ≤ f(A) ≤ 0.1, where f(A) is represented by the equation: f(A) = σa/Aave, σa is the deviation of a gas volume fraction Ar in the foamed dielectric layer, and Aave is the average of the gas volume fractions Ars at positions in the foamed dielectric layer.

The inorganic filler having a high dielectric constant preferably is made of titanium oxide, titanate, zirconate, or a mixture thereof. The titanate is preferably barium titanate, strontium titanate, calcium titanate, or magnesium titanate. The zirconate is useful for finely adjusting the dielectric constant of titanium oxide and for adjusting the temperature dependence of titanium oxide by mixing with titanium oxide.

The pre-expanded beads used for constituting the foamed dielectric layer having a dielectric constant of 1.5 or more can be classified and selected by gravity separation or size classification.

The Luneberg lens is produced by a method including the steps of mixing a polyolefin resin and/or a derivative thereof with an inorganic filler having a high dielectric constant, the volume ratio of the polyolefin resin and/or the derivative thereof to the filler being 99 to 50:1 to 50; adding a foaming agent to the resulting resin mixture and then performing pre-expansion; classifying the resulting pre-expanded beads by gravity separation or size classification; and forming the classified pre-expanded beads into a shape. The present invention also provides this production method. The forming is performed by a bead foam-forming method.

### Brief Description of the Drawings

Figure 1 is a cross-sectional view of a lens according to an embodiment of the present invention.
Figure 2 is a cross-sectional view of a lens according to another embodiment of the present invention.
Figure 3 shows a test method for evaluating performance.
Figure 4 shows the density distribution of foamed beads containing a filler.
Figures 5-1 to 5-8 each show the density distribution of each group classified by gravity separation.
Figures 6-1 to 6-8 each show the density distribution of each group classified by weight and size classification.
Figure 7 shows the design concept for designing dielectric constants of the Luneberg lens.

### Best Mode for Carrying Out the Invention

Embodiments of the Luneberg lens of the present invention will be described based on the drawings. In the drawings, the same reference numeral represents the same element. Redundant description is not repeated. The ratios of dimensions in the drawings are not always the same as those of the actual objects described in the respective drawings.

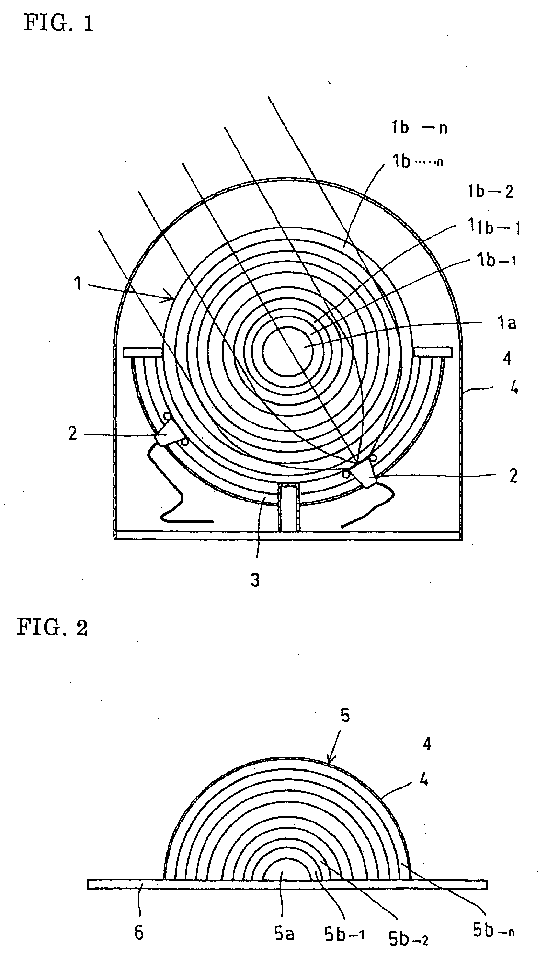

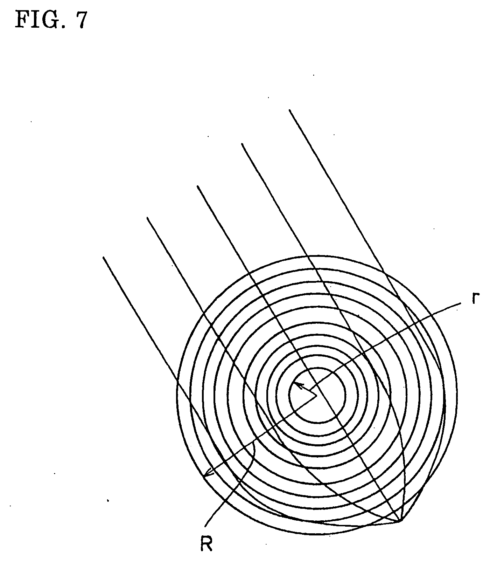

In Fig. 1, a spherical, multilayer Luneberg lens 1 is designed so that dielectric constants at any portion satisfy the following equation ε = 2 - (r/R)² (see Fig. 7, where r represents the radius of a hemispherical core 1a, R represents the radius of a different diameter hemispherical core 1b₋ₙ). An electromagnetic wave antenna includes the Luneberg lens 1, position-adjustable primary feeds 2, a holder 3 for holding the primary feeds 2, the holder 3 being capable of adjusting the elevation angle, and cover 4 that transmits electromagnetic waves.

Figure 2 shows a semispherical Luneberg lens 5 which is combined with a reflector 6 for reflecting electromagnetic waves. This electromagnetic wave lens is also combined with a primary feed and a holder for holding the feed (which are not shown in the figure) at a predetermined position so as to form an antenna.

The Luneberg lenses 1 and 5 shown in Figs. 1 and 2 are each produced as follows: Pre-expanded beads are made from a resinous mixture prepared by mixing a polyolefin resin and/or a derivative thereof with an inorganic filler having a high dielectric constant described above, the volume ratio of the polyolefin resin and/or the derivative thereof to the filler being 99 to 50:1 to 50. The pre-expanded beads are formed into dielectric layers. The resulting dielectric layers (in Fig. 1, two hemispherical cores 1a and two of each different diameter hemispherical shell 1b₋₁ to 1b₋ₙ; in Fig. 2, a semispherical core 5a and different diameter hemispherical shells 5b₋₁ to 5b₋ₙ) are combined to form the Luneberg lenses. With respect to at least the dielectric layer having a dielectric constant of over 1.5, the pre-expanded beads selected by subjecting to classification are used as a material in order that f(A) represented by the equation f(A) = σa/Aave described above satisfies the expression 0.0005 ≤ f(A) ≤ 0.1. If the content of the filler is 50 percent by volume or more, foam breakage tends to occur, thereby making it difficult to achieve foaming at a desired expansion ratio.

The foam dielectrics are produced by a foam bead forming method.

The method of bead forming includes producing resin beads containing a foaming agent, foaming the resulting resin beads at a predetermined expansion ratio to form pre-expanded beads, charging the pre-expanded beads into a mold, and introducing steam into the mold to perform foaming by heating. By employing the steam heating, even when a thick product is molded, the steam is introduced between the beads to uniformly heat the beads, thus achieving uniform forming.

A method of producing the Luneberg lens of the present invention will be described below.
(I) Materials used
   (1) Resin
      Any of the polyolefin resins, such as polyethylene (PE), polypropylene (PP), and polystyrene (PS), may be used. These resins have low tan δ and can be applied to forming foamed beads.
   (2) Filler
      Any inorganic filler having a high dielectric constant may be used. In particular, titanium oxide (TiO₂), titanates, zirconates, or a mixture thereof are preferable because of their high dielectric constant. Among the titanates, barium titanate (BaTiO₃), strontium titanate (SrTiO₃), calcium titanate (CaTiO₃), and magnesium titanate (MgTiO₃) are suitable.
   (3) Gas

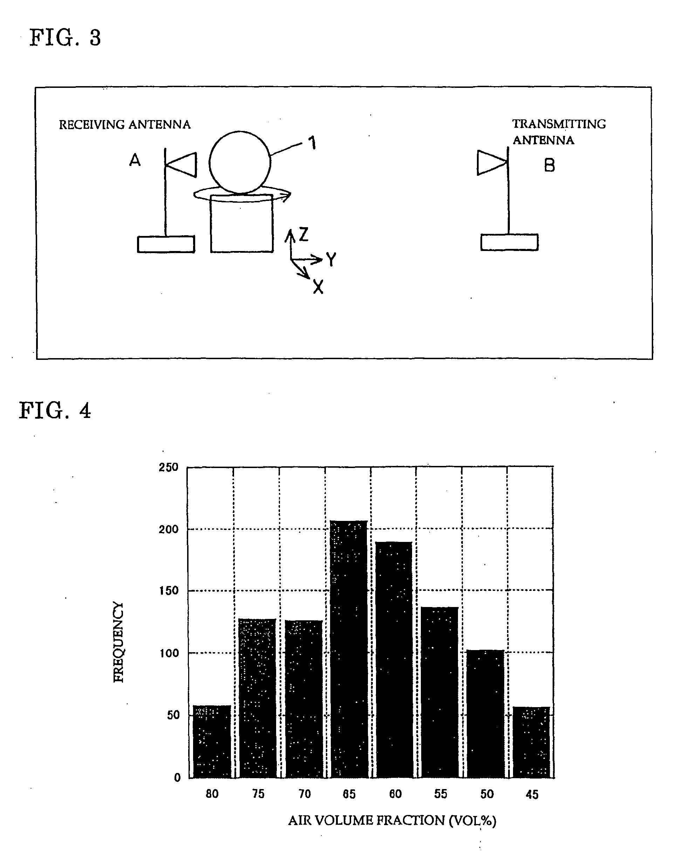

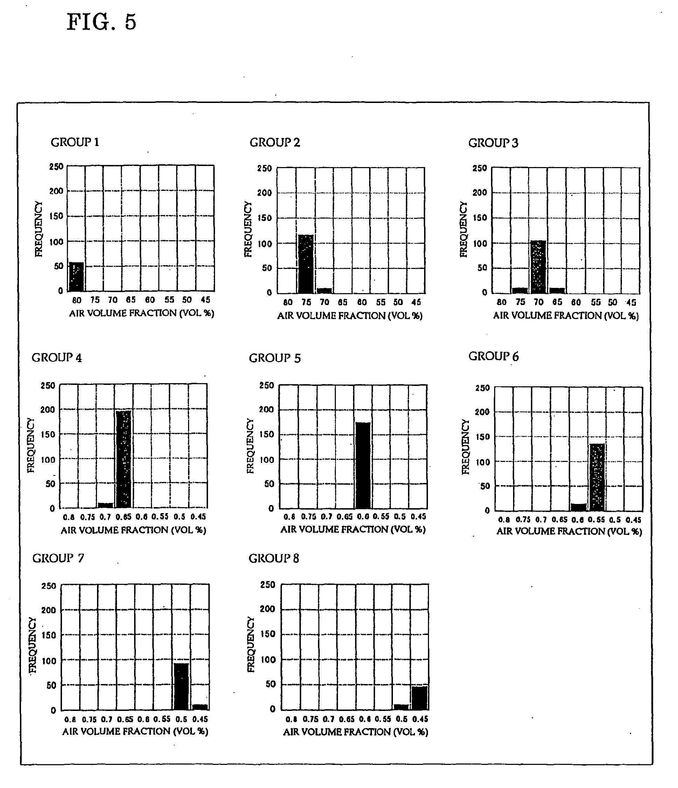

   Air may be used as a gas to be used. However, the gas is not limited to air.
(II) Production process
   (1) Foamed Bead forming step
      1) Mixing resin with filler
         The polyolefin resin and the inorganic filler having a high dielectric constant are kneaded at a predetermined ratio. The resulting mixture is pelletized into pellets composed of the resin mixture having a substantially uniform concentration (distribution density) of the inorganic filler having a high dielectric constant. To perform classification, the concentration of the inorganic filler having a high dielectric constant is required to be uniform. The concentration is preferably within a range of plus/minus 0.5% and more preferably plus/minus 0.1% with reference to the designed concentration. The mixing of the resin and the filler is performed with a mixing apparatus such as a biaxial or uniaxial extruder, a mixer, a kneader, or a Banbury mixer.
         The size of each pellet is preferably 1/4 or less and more preferably 1/10 or less of the wavelength of the electromagnetic wave used.
      2) Pre-expansion (gas filling)
         The resulting pellets are charged into a foaming tank. A gas is injected into a solvent and is enclosed in the pellets under high temperature and high pressure. The pellets and the gas are uniformly mixed in the solvent to the extent possible in order that the amount of the gas enclosed is constant.
         The steps of items 1) and 2) may be simultaneously performed. In this case, polyolefin monomers, polymerization promoters, and fillers are uniformly dispersed in a solvent, and the gas filling is performed while conducting polymerization so that pre-expanded beads are formed.
   (2) Classification and selection step
      The resulting pre-expanded beads are classified by gravity separation or size/weight classification to obtain beads having target density and density distribution. A specific procedure of the classification will be described below.
   (3) Forming step
      The pre-expanded beads are charged into a metal mold. Steam for heating is introduced into the metal mold. The beads are foamed and fused by a forming machine into a shape of a product. In this step, the degree of foaming of the beads may be adjusted as required by a preliminary pressure device before forming.
   (4) Drying step
      The resulting product is dried in a drying room at 40°C to 60°C.
      The experimental results of classification of the pre-expanded beads containing the filler will be described below.
      1) Gravity separation
         Pre-expanded beads having the density distribution shown in Fig. 4 (air is used as the gas) were classified into eight types by a gravity separator GA100 manufactured by Cimbria HEID GmbH under the conditions as follows: vibration, 30 times/min; air 25 L/min: angle of inclination, A5.0°; and feed rate of beads: 9 kg/min. Figure 5 shows density distribution of the beads in each classified lot.
      2) Size classification

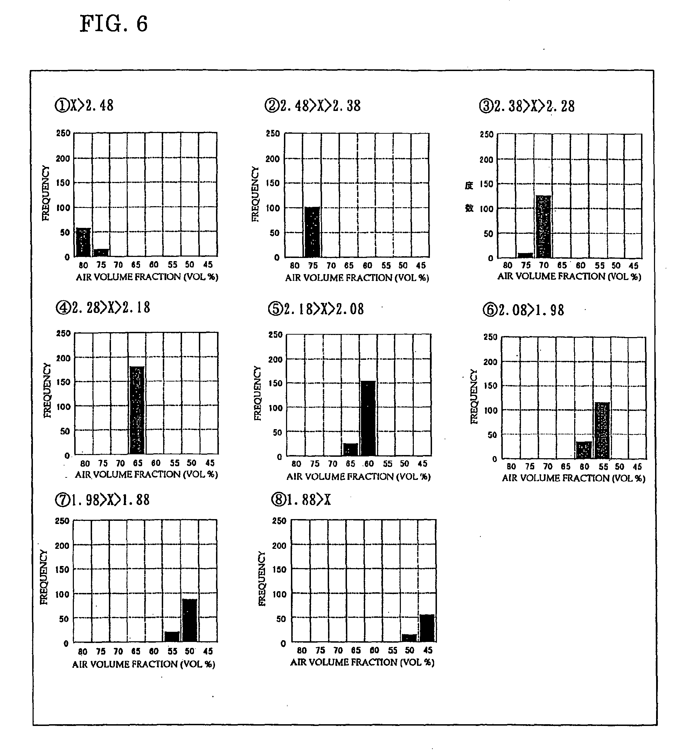

Pre-expanded beads having a substantially constant filler content and having significantly low variations in weight were produced. The resulting beads were classified through screens having different opening sizes (according to Japanese Industrial Standard Mesh 2.48, 2.38, 2.28, 2.18, 2.08, 1.98, and 1.88). Figure 6 shows the density distribution of the beads in each classified lot. In Comparative example 1 in the Table, the beads were not subjected to classification. In Comparative example 12, workability was significantly poor since each specific gravity of the beads was measured by a methanol method.

The experimental results show that the classification and selection can significantly reduce the variations in the gas volume fraction that are generated during the foaming step, that are most difficult to control, and that cause nonuniformity of the dielectric constant.

Examples of lenses according to the present invention will now be described.

A PP manufactured by Sumitomo Chemical Co., Ltd. and CaTiO₃ manufactured by Otsuka Chemical Co., Ltd. were kneaded by a biaxial extruder. After kneading, the resulting resin mixture was substantially uniformly cut into pellets each having a length of 2 mm with a pelletizer.

In the resulting pellets composed of the resin mixture, the weight ratio of polypropylene (PP) to CaTiO₃, i.e., PP/CaTiO₃, was 50/50, and the variations were within 0.3 percent by weight.

Next, the resulting pellets were charged into a foaming tank. CO₂ was enclosed in the pellets. Pre-expansion was then performed. The resulting pre-expanded beads were classified by size classification or gravity separation. A preliminary pressure was applied to the prepared pre-expanded beads with a preliminary pressure device. The resulting beads were charged into a metal mold. Steam was introduced into the metal mold to perform foaming.

Eight metal molds were used to produce eight types of foamed dielectric segments (a pair of hemispherical bodies that were to be faced each other and disposed at the center; and seven pairs of hemispherical shells, each pair being a different type and shape from the other pair, which are to be laminated on the outer side of the inner side bodies). These were combined into a spherical Luneberg lens having a diameter of 450 mm. For a layer having a dielectric constant of 1.6 or less, pre-expanded beads that were not subjected to classification was used.

The resulting spherical Luneberg lens 1, a receiving antenna A, and a transmitting antenna B were disposed in an anechoic chamber as shown in Fig. 3. The gain of the Luneberg lens 1, variations in gain, and an antenna pattern (sidelobe and the like) were measured. The table shows the results.

**Table 1**

| | | Classification | | | | Produced Luneberg lens | | | | | |
|---|---|---|---|---|---|---|---|---|---|---|---|
| | | Method | Separation level | Time | Blending | f(A) | Gain [dB] | | sidelobe | | Workability(cost) |
| | | | | | | | Max | f(A) Variations | 32- 25 | 29 - 25 | |
| 1 | Comparative example | None | | | | 0.210 | 26.3 | ±3.0 | F | F | P |
| 2 | Example | Size | 0.2 mm | 1 | None | 0.020 | 32.5 | ±1.0 | P | F | P |
| 3 | Example | Size | 0.1 mm | 1 | None | 0.015 | 33.1 | ±0.8 | P | F | P |
| 4 | Example | Size | 0.1 mm | 2 | None | 0.008 | 33.5 | ±0.2 | P | P | P |
| 5 | Example | Size | 0.1 mm | 3 | None | 0.002 | 33.8 | <±0.2 | P | P | P |
| 6 | Example | Size | 0.1 mm | 5 | None | 0.0008 | 34.0 | <±0.2 | P | P | G |
| 7 | Example | Size | 0.05 mm | 5 | None | 0.0006 | 34.0 | <±0.2 | P | P | G |
| 8 | Example | Size | 0.2 mm | 1 | Done (adjoining peaks) | 0.08 | 32.0 | ±1.3 | P | F | P |
| 9 | Example | Size | 0.1 mm | 1 | Done (adjoining peaks) | 0.020 | 32.8 | ±1.0 | P | F | P |
| 10 | Example | Size | 0.1 mm | 2 | Done (adjoining peaks) | 0.016 | 33.3 | ±0.5 | P | F | P |
| 11 | Comparative example | Size | 0.2 mm | 1 | Done (nonadjoining peaks) | 0,12 | 31.6 | ±1.5 | F | F | P |
| 12 | Comparative example | Density of each of beads was measured | | | | 0.0004 | 34.0 | <±0.2 | P | P | F |
| 13 | Example | Gravity | 6 6 | 1 | None | 0.019 | 32.5 | ±1.0 | P | F | P |
| 14 | Example | Gravity | 8 | 1 | None | 0.015 | 33.1 | ±0.8 | P | F | P |
| 16 | Example | Gravity | 12 | 1 | None | 0.008 | 33.5 | ±0.2 | P | P | P |
| 16 | Example | Gravity | 12 | 1 | Done (adjoining peaks) | 0.014 | 33.2 | ±0.6 | P | F | P |
| Method: The term "size" represents size classification, and the term "gravity" represents gravity separation. | | | | | | | | | | | |
| Separation level: In size classification, the values represent the sizes of the openings of screens. In gravity separation, the values represent the number of groups classified (the number of lots classified). | | | | | | | | | | | |
| Blending: The term "adjoining peaks" means that a bead group having a density closest to and higher than a target density and a bead group having a density closest to and lower than the target density were mixed at a predetermined ratio to adjust the density. The term "nonadjoining peaks" means that a bead group having a density second-closest to and higher than a target density and a bead group having a density second-closest to and lower than the target density were mixed at a predetermined ratio to adjust the density. | | | | | | | | | | | |
| Sidelobe: The exceeding values of sidelobes are within 10% relative to the specified values 32 - 25 logΦ in the first design example according to EIAJ CPR-5104A or the specified values 29 - 25 logΦ according to ITU-R recommendation. | | | | | | | | | | | |
| Workability (cost): The process has industrial productivity P: pass, G: good, and F: failure. | | | | | | | | | | | |

The table shows that when the classification and selection of the pre-expanded beads is performed, and thus f(A) represented by the equation f(A) = σa/Aave satisfies the expression 0.0005 ≤ f(A) ≤ 0.1, it is possible to produce an electromagnetic wave lens having high gain, stability, and low sidelobes, and satisfying stringent requirements of the receiving antenna.

### Industrial Applicability

As has been described above, the content of a gas in at least a dielectric foamed layer having a dielectric constant of 1.5 or more is uniformized to improve the uniformity of the dielectric constants. Therefore, it is possible to provide a Luneberg lens having high gain and low sidelobes. In particular, with respect to the sidelobes, it is possible to provide the lens that has such small deviations as can sufficiently satisfy the stringent recommended values required for the receiving antenna.

The G/T characteristic is also improved because of high gain and low sidelobes.

Furthermore, high uniformity is achieved, and thus it is possible to ensure characteristics essentially required for a multi-beam antenna, i.e., invariable gain, sidelobes, and focal length for electromagnetic waves from any direction.

The inorganic filler having a high dielectric constant is added, and the expansion ratio is increased; hence, it is possible to provide a lightweight lens.

In addition, according to the present invention, the forming can efficiently be performed with a general-purpose bead-forming machine, enabling high mass productivity, good yield, and a reduction in the cost of lenses.

## Claims

1. A Luneberg lens having a single-layer structure or a multilayer structure containing a plurality of layers having different dielectric constants, wherein the respective structure is produced by mixing a polyolefin resin and/or a derivative thereof with an inorganic filler having a high dielectric constant, the volume ratio of the polyolefin resin and/or the derivative thereof to the filler being 99 to 50:1 to 50, adding a foaming agent to the resulting resin mixture and then performing preliminary expansion, and molding the resulting pre-expanded beads; and wherein at least a foamed dielectric layer having a dielectric constant of 1.5 or more is formed using the pre-expanded beads that have been subjected to classification and selection such that f(A) satisfies the expression 0.0005 ≤ f(A) ≤ 0.1, where f(A) is represented by the equation: f(A) = σa/Aave, σa is the deviation of a gas volume fraction Ar in the foamed dielectric layer, and Aave is the average of the gas volume fractions Ars at positions in the foamed dielectric layer.

2. The Luneberg lens according to claim 1, wherein the inorganic filler having a high dielectric constant comprises titanium oxide, a titanate, a zirconate, or a mixture thereof.

3. The Luneberg lens according to claim 2, wherein the titanate is barium titanate, strontium titanate, calcium titanate, or magnesium titanate.

4. The Luneberg lens according to claim 1 or 2, wherein the foamed dielectric layer having a dielectric constant of 1.5 or more is formed using the pre-expanded beads classified by gravity separation or size classification.

5. A method of producing a Luneberg lens that satisfies the requirements described in claim 1, comprising the steps of:
mixing a polyolefin resin and/or a derivative thereof with an inorganic filler having a high dielectric constant, the volume ratio of the polyolefin resin and/or the derivative thereof to the filler being 99 to 50:1 to 50;
adding a foaming agent to the resulting resin mixture and then performing pre-expansion;
classifying and selecting the resulting pre-expanded beads by gravity separation or size classification; and
forming the classified and selected pre-expanded beads into a shape.
